# EUROPÄISCHE PATENTANMELDUNG

(11) **EP 3 151 076 A1**
(43) Veröffentlichungstag der Anmeldung: **05.04.2017**
(21) Anmeldenummer: 16190483.4
(22) Anmeldetag: 23.09.2016
(51) Int. Cl.: G05B 19/418, G05B 19/042

(54) **VERFAHREN ZUR MODELLIERUNG EINES TECHNISCHEN SYSTEMS**

(30) Priorität: 29.09.2015 DE 102015218744
(71) Anmelder: Siemens Aktiengesellschaft, 80333 München (DE)
(72) Erfinder: Geipel, Markus Michael, 80799 München (DE); Lamparter, Steffen, 85622 Feldkirchen (DE); Ringsquandl, Martin, 83278 Traunstein (DE)

(57) **Zusammenfassung**

Bei dem Verfahren zur Modellierung eines technischen Systems (TES) wird zunächst ein semantisches Systemmodell (SSM) des technischen Systems (TES) generiert wird und nachfolgend die Abhängigkeiten innerhalb des Systemmodells mittels einer Abhängigkeitsanalyse (DEA) analysiert, welche auf Eigenschaften des semantischen Systemmodells (SSM) beruht. Mit dem Verfahren ist es möglich z.B. Qualitätsprobleme bei Türen oder Ursachenaufklärung (ROC) einer anomalen Brennstofftemperatur in einer Gasturbine, auf der Grundlage vorangehender Ereignisse und Messungen vorherzusagen.

## Beschreibung

Die Erfindung betrifft ein Verfahren zur Modellierung eines technischen Systems.

Die Modellierung technischer Systeme gewinnt zunehmend an Bedeutung insbesondere für den Betrieb und die Optimierung solcher komplexen technischen Systeme. Beispielsweise werden sogenannte lernende Modelle zur Optimierung von Gasturbinen sowie zur vorausschauenden Wartung als auch zur Kostenreduktion beim Betrieb von Maschinen eingesetzt.

Eine große Herausforderung bei der Analyse von Daten von komplexen technischen Systemen ist der hochdimensionale Datenraum der Datenverbindungen des technischen Systems. Beispielsweise liefert eine moderne große Gasturbine Daten für mehr als 10 000 Variable. Im Karosseriewerk einer Fahrzeug-Produktionslinie beispielsweise liefern 150 Steuerungseinrichtungen mehr als 100 000 Variable mit einer Datenrate von insgesamt mehr als 6 000 000 Datenpunkten je Minute. Ohne weitere Information müssen sämtliche potentiellen Beziehungen dieser Variablen untereinander berücksichtigt werden. Betrachtet man als weiteres Beispiel zwei Maschinen mit jeweils 100 Sensoren, so bestehen bei einer Verbindung dieser beiden Maschinen 4950 mögliche Beziehungen zwischen diesen Sensoren.

Auch für die möglichen Unterkombinationen bei einem großen Satz von Eingangsgrößen ergibt sich bei weiter wachsender Zahl von Eingangsgrößen kombinatorisch eine dramatisch wachsende Zahl.

Vor diesem Hintergrund des Standes der Technik ist es Aufgabe der Erfindung, ein verbessertes Verfahren zur Modellierung eines technischen Systems bereitzustellen.

Diese Aufgabe wird mit einem Verfahren zur Modellierung eines technischen Systems mit den in Anspruch 1 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Modellierung eines technischen Systems wird zunächst ein semantisches Systemmodell des technischen Systems generiert und nachfolgend werden die Abhängigkeiten innerhalb des Systemmodells mittels einer Abhängigkeitsanalyse analysiert, welche auf Eigenschaften des semantischen Systemmodells beruht. D.h., die Eigenschaften des semantischen Systemmodells werden für die Abhängigkeitsanalyse herangezogen. Mittels der Abhängigkeitsanalyse können die zahlreichen Abhängigkeiten in ihrer Relevanz eingeschätzt werden.

einem ersten Schritt des erfindungsgemäßen Verfahrens wird zum technischen System ein Systemmodell generiert. Dazu wird erfindungsgemäß automatisiert Hintergrundwissen zum technischen System herangezogen. Die dazu heranziehbaren Technologien sind an sich bekannt. Bei einer bevorzugten Weiterbildung des erfindungsgemäßen Verfahrens wird das semantische Systemmodell mittels Steuerungs- und/oder Prozess- und/oder Zusammensetzungsinformationen generiert.

Solche Steuerungs- und/oder Prozess- und/oder Zusammensetzungsinformationen liegen zweckmäßigerweise etwa als Sensornamenssystem vor, und/oder insbesondere als Kraftwerk-Kennzeichensystem (KKS). Weitere Informationsquellen sind etwa Automatisierungssysteme wie beispielsweise das TIA-Modell (TIA = (engl.) "Totally integrated Systems") aus dem Hause Siemens. Weiterhin können Informationen von Aufbauplänen und/oder Anlagenplänen des technischen Systems genutzt werden. Zudem können Steuerroutinen, welche Steuereinrichtungen des technischen Systems steuern, herangezogen werden.

Zweckmäßig wird jede Modellinstanz in einer Wissensrepräsentationssprache abgebildet. Vorzugsweise werden dafür etablierte Wissensrepräsentationssprachen herangezogen, insbesondere OWL (OWL = (engl.) "Web Ontology Language") und/oder RDF (RDF = (engl.) "Resource Description Framework"). Geeigneterweise werden dabei Informationen aus unterschiedlichen Informationsquellen wie oben beschrieben in einer einzigen Ontologie zusammengefasst. Idealerweise werden einander entsprechende Begriffe der Ontologie semantisch identifiziert und einander gleichgesetzt, d.h. die Ontologie wird entsprechend konsolidiert. Auf diese Weise wird ein Kontext zwischen den einzelnen Modellinstanzen und dem zwischen diesen erfolgenden Datenfluss hergestellt.

Das erhaltene semantische Systemmodell lässt sich nachfolgend komprimieren. Dazu wird das Systemmodell auf die relevanten Beziehungen zwischen Modellinstanzen reduziert. Dies erfolgt mittels einer Abhängigkeitsanalyse. Dazu werden zunächst potentielle Abhängigkeiten zwischen Instanzen oder Komponenten des Systemmodells bestimmt. Solche relevante Beziehungen ergeben sich insbesondere aus derselben physikalischen Umgebung (speziell räumliche Nähe und/oder besonders geringe Abweichungen der Umgebungstemperaturen) und/oder aus Prozessbeziehungen zwischen den Instanzen und/oder die Steuerung durch denselben Systemteil oder dieselbe Software und/oder gemeinsame Ressourcen, speziell eine gemeinsame Energieversorgung und/oder ein gemeinsamer Betrieb durch Betriebspersonal und/oder sonstige Gemeinsamkeiten, etwa ein identischer Hersteller, dasselbe Betriebsalter und/oder dieselbe Konfiguration.

Diese relevanten Abhängigkeiten lassen sich formalisieren, insbesondere als "Teil-von"-Beziehung von Instanzen, als zeitliche "nachher"-Beziehung zwischen Produktionsschritten oder als steuerlogische Beziehung in der Art einer "berechnet-auf-Grundlage-von"-Beziehung oder als Instanz mit bestimmten Teilen, Ressourcen oder Eigenschaften, als "weistauf"-Beziehung, ausdrücken.

Das resultierende semantische Systemmodell ist nunmehr unabhängig von den Informationsquellen, die ursprünglich zur Systemmodellierung herangezogen wurden. Ferner ist das semantische Systemmodell unabhängig vom jeweiligen konkreten technischen Gebiet des technischen Systems (etwa Energiegewinnung oder Fertigung, etc.) und bleibt zugleich in einer Wissensrepräsentationssprache formalisiert.

Bei einer bevorzugten Weiterbildung des Verfahrens gemäß der Erfindung werden im Systemmodell die Abhängigkeiten abhängig von der Abhängigkeitsanalyse gewichtet.

Vorzugsweise werden bei dem erfindungsgemäßen Verfahren im Systemmodell die Abhängigkeiten gewichtet, indem die Abhängigkeiten abhängig von der Abhängigkeitsanalyse in ihrer Zahl reduziert werden.

Mittels des erfindungsgemäßen Verfahrens ist es nicht erforderlich, den hochdimensionalen Datenraum eines komplexen technischen Systems manuell zu reduzieren. Der dazu erforderliche Aufwand, der umfangreiche Sachaufklärung und Abstimmung mit einschlägig bewanderten Ingenieuren zu unterschiedlichen Teilen oder Prozessen des Systems erforderte, ist erfindungsgemäß entbehrlich. Die Systemmodellierung kann folglich auch deutlich schneller erfolgen. Insbesondere unterliegt das erfindungsgemäße Verfahren weiterhin keiner gedanklichen Voreingenommenheit, welche insbesondere das Risiko bedingt, dass wichtige Beziehungen zwischen Teilen oder Instanzen des Systems irrtümlich nicht oder nicht angemessen berücksichtigt werden.

Das erfindungsgemäße Verfahren lässt sich hinsichtlich hochdimensionaler Datenräume erheblich besser skalieren, da sich erfindungsgemäß die Anzahl möglicher Abhängigkeiten deutlich reduzieren lässt. Insbesondere können technische Systeme handhabbar werden, welche sich bislang aufgrund ihrer großen Komplexität einer eingehenden Systemmodellierung entzogen.

Die Qualität von analytischen Modellen ist erfindungsgemäß erheblich verbessert, sodass bessere Vorhersagen, Ursachenaufklärungen und eine Steuerung des Systems besser möglich sind.

In einer vorteilhaften Weiterbildung des Verfahrens gemäß der Erfindung prüft die Abhängigkeitsanalyse, ob eine jeweilige Abhängigkeit eine gerichtete Abhängigkeit ist.

Erfindungsgemäß werden Abhängigkeitsbeziehungen und Unabhängigkeitsbeziehungen zwischen einzelnen Systeminstanzen geeigneterweise wie nachfolgend erläutert bestimmt.

Vorliegend wird unter Unabhängigkeit eine gerichtete und direkte Beziehung verstanden. Gerichtet meint, dass eine Größe A von B abhängt, B jedoch nicht notwendigerweise von A (beispielsweise ist Regen unabhängig von der Nässe einer Straße, jedoch ist die Nässe der Straße durchaus abhängig vom Auftreten von Regen). Direkt meint, dass zwei Größen nicht bereits deswegen eine Abhängigkeitsbeziehung zueinander aufweisen, bloß weil eine erste der beiden Größen direkt von einer dritten Größe abhängt, welche von einer zweiten der beiden Größen direkt abhängt. Diese beiden Größen hängen lediglich indirekt voneinander ab.

Die Abhängigkeitsbeziehungen werden nun von den relevanten Abhängigkeiten des Systemmodells abgeleitet.

Gilt etwa für zwei Größen, dass die erste der beiden Größen Teil eines ersten Bestandteils des Systems ist und die zweite der beiden Größen Teil eines zweiten Bestandteils des Systems ist und gilt ferner, dass die beiden Bestandteile des Systems physikalisch voneinander isoliert sind, so wird geschlossen: Die beiden Größen sind jeweils voneinander unabhängig.

Tritt ferner eine Größe in einem späteren Prozessschritt im Sinne einer "nachher"-Beziehung vergleichen mit einer zweiten Größe auf, so ist diese zweite Größe unabhängig von der später auftretenden Größe.

Ist weiterhin eine zweite Größe auf der Grundlage der ersten Größe berechnet worden, so ist die erste Größe von der zweiten Größe unabhängig, die zweite Größe hingegen von der ersten Größe abhängig.

Ferner wird etwa für eine "weist-auf"-Beziehung, gemäß welcher ein Bestandteil des Systems die Instanzen A und B aufweist, zwischen A und B jeweils die Relation "nicht unabhängig" angesetzt.

Auf diese Weise lässt sich das semantische Systemmodell auf die entsprechenden Abhängigkeitsinformationen abstrahieren.

Dieses entsprechend abstrahierte semantische Systemmodell wird nun idealerweise einer kontextsensitiven Analyse unterzogen: Dazu stehen drei Verfahren zur Verfügung: Einerseits wird aus der Abhängigkeitsanalyse Ursacheninformation gewonnen. So lässt sich insbesondere aus einer engen zeitlichen Abfolge von Ereignissen eines technischen Vorgangs zuverlässig auf eine Ursächlichkeit schließen. Ferner lassen sich dazu die Steueranweisungen der Steuereinrichtungen heranziehen.

Illustrieren lässt sich dieser Zusammenhang wie folgt: Es sei etwa bekannt, dass die Größe B von der Größe A unabhängig ist. Ferner sei bekannt, dass die Größen A und B eine hohe Korrelation miteinander aufweisen. Beide Informationen zusammen betrachtet lassen den Schluss zu, dass A von B abhängt. Lägen mehrere Variablen vor, so bliebe noch eine zugleich bestehende Abhängigkeit von A und B von einer dritten Variable im Sinne einer gemeinsamen Ursache zu prüfen. Entsprechende Algorithmen dazu sind an sich bekannt.

Die Abhängigkeitsinformationen lassen sich nachfolgend nutzen um eine Systemanalyse durchzuführen, die ansonsten aufgrund eines hochdimensionalen Datenraums nicht hätten durchgeführt werden können.

Illustrationshalber ist das Verfahren derart ausgebildet, dass etwa eine Beziehung zu einer Klassenvariablen C in einem technischen Prozess, etwa zur Ausfallvorhersage, aufgrund der Abhängigkeits- und Kausalitätsbeziehungen nach relevant und irrelevant bezüglich C unterteilbar sind. So werden zweckmäßig alle direkten Abhängigkeiten der Klassenvariablen C von anderen Größen als relevant beibehalten. Sämtliche Einflussgrößen hingegen, von welchen C lediglich indirekt abhängt, werden nicht als relevante Beziehung beibehalten. Entsprechend sind die Abhängigkeiten der Klassenvariablen C deutlich reduziert. Ferner lassen sich diejenigen Größen, welche später auftreten als die Klassenvariable C, nicht weiter betrachtet, da Ursachen stets zeitlich ihren Wirkungen vorausgehen.

Das oben beschriebene Verfahren lässt sich in einem erfindungsgemäßen Verfahren zur Ursachenaufklärung einsetzen. Dazu werden die relevanten Abhängigkeiten nach einer möglichen Ursache, etwa für einen im technischen System auftretenden Fehler, ausgewertet. Dazu werden insbesondere auch die Informationen aus dem semantischen Systemmodell herangezogen.

Bevorzugt werden bei dem erfindungsgemäßen Verfahren Ergebnisse der Abhängigkeitsanalyse herangezogen und hierauf basierend wird oder werden eine Überwachung des technischen Systems und/oder eine Steuerung des Systems und/oder die Verbesserung einer solchen Steuerung und/oder eine Ursachenanalyse für Vorgänge des technischen Systems und/oder eine Analyse von Daten des technischen Systems durchgeführt.

Bevorzugt ist das Verfahren gemäß der Erfindung selbstlernend ausgebildet.

Das erfindungsgemäße Computerprogrammprodukt ist zur Durchführung eines der vorhergehenden Verfahren ausgebildet. Nachfolgend wird die Erfindung anhand eines in der Zeichnung dargestellten Ausführungsbeispiels näher erläutert.

Es zeigen:
Fig. 1 die Prozessschritte eines erfindungsgemäßen Verfahrens zur Modellierung eines technischen Systems schematisch in einer Prinzipskizze sowie
Fig. 2 die Abhängigkeitsanalyse bei einem Prozessschritt des erfindungsgemäßen Verfahrens gemäß Fig. 1 schematisch in einer Prinzipskizze.

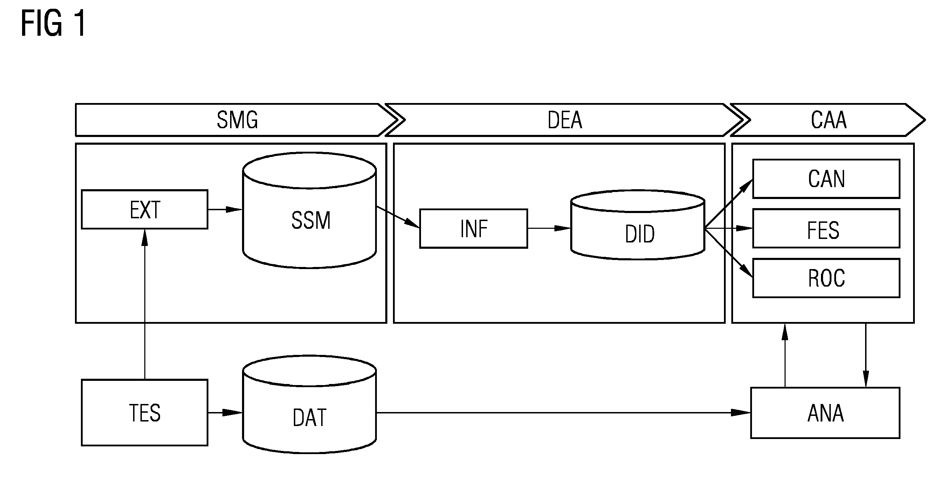

Das in Fig. 1 dargestellte erfindungsgemäße Verfahren zur Systemanalyse ist Bestandteil eines erfindungsgemäßen Verfahrens zur Vorhersage von Qualitätsproblemen beim Anschweißen von Türen in einer Fahrzeug-Produktionslinie eines Werkhallenfertigungssystems. Dieses Werkhallenfertigungssystem bildet das technische System TES. In weiteren, nicht eigens dargestellten Ausführungsbeispielen ist die erfindungsgemäße Verfahren Bestandteil einer sonstigen nachgelagerten Datenanalyse.

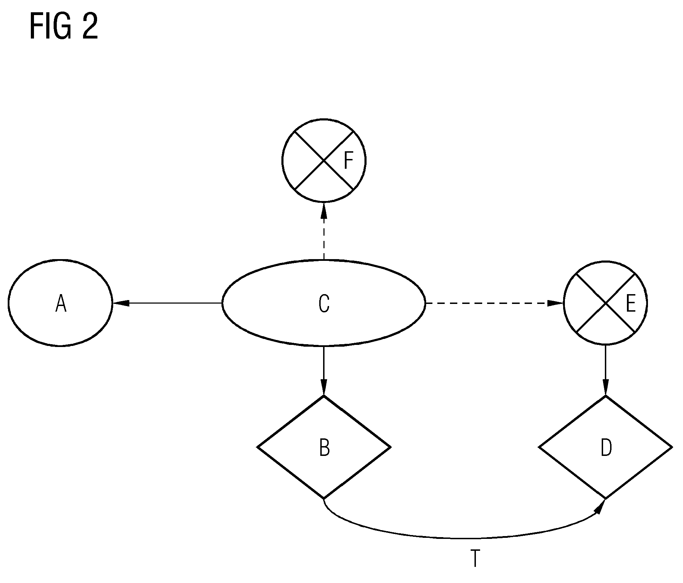

Beim technischen System TES stellt sich die Aufgabe, Qualitätsprobleme bei Türen auf der Grundlage vorangehender Ereignisse und Messungen vorherzusagen. Die letzte Steuereinrichtung in der Montagelinie ist zuständig für die Qualitätsprüfung und löst ein Tür-Qualitäts-Ereignis C (s.a. Fig. 2) aus, wenn ein Spaltmaß zwischen Tür und übrigem Fahrzeug von einem vorgegebenen Sollintervall abweicht. Ursachen für solche Ereignisse können entweder falsch eingestellte Montageroboter sein oder auch Probleme bei der Positionierung des übrigen Fahrzeugs oder eine fehlerhafte Entgegennahme der Tür durch Montageroboter oder eine Reihe von weiteren Ursachen. Zur konkreten Datenanalyse ANA sind dabei zunächst die Daten DAT wie nachfolgend beschrieben zu gewinnen:
Zunächst erfolgt eine Generation SMG eines semantischen Systemmodells SSM. Dazu werden die Aufbaupläne zum Aufbau von PLC-Einheiten (PLC = (engl.) "Programmable Logic Controller") herangezogen und die daraus erhältliche semantische Information EXT in einem einheitlichen semantischem Systemmodell SSM festgehalten. Ferner können Fertigungsprozessmodelle herangezogen werden, welche beispielsweise im Simatic-IT-MES-Fertigungssoftwarepaket erhältlich sind.

Hieran schließt sich nun eine Abhängigkeitsanalyse DEA an: aus dem semantischen Systemmodell SSM werden Beziehungen INF von Variablen mit physikalischen Sensoren und Beziehungen dieser Sensoren mit den PLC-Einheiten abgeleitet. In der Folge werden daher automatisiert eine Reihe von Ortsbeziehungen sowie von "ist-Bestandteil-von"-Beziehungen aufgestellt. Die Programme, welche die PLC-Einheiten steuern, etwa geschrieben in der IEC-61331-3-Programmiersprache, geben Beziehungen in der Art von rechnerischen Abhängigkeiten preis. Mittels der Fertigungsmodelle lässt sich ferner ein Satz zeitlicher Beziehungen ableiten, also Beziehungen der Art "geht-voraus" und "folgt-nach".

In der Abhängigkeitsanalyse DEA werden nun (Fig. 2) physikalisch voneinander getrennte PLC-Einheiten F und Variablen, welche zeitlich nach dem Tür-Montage-Schritt B gemessen werden, mithin mit der zeitlichen "folgt-nach"-Beziehung S versehen sind, als unabhängig bezüglich des Tür-Qualitäts-Ereignisses C gekennzeichnet. Solche Variablen, die zeitlich nach dem Tür-Montage-Schritt bedeutsam sind, umfassen beispielsweise solche E während der Montage D der inneren Türverkleidung. Dazu wird in an sich bekannter Weise eine schlussfolgernde Softwarekomponente eingesetzt, ein sogenannter *"Semantic Reasoner".* Diese Softwarekomponente bildet wie vorstehend beschrieben zeitliche Beziehungen von Variablen auf Abhängigkeitsrelationen ab. Direkte Abhängigkeiten D werden mittels der Produktionsprozessinformation abgeleitet, welche etwa das Tür-Qualitäts-Ereignis sowie ein Positionier-Ereignis miteinander mit einem bestimmten Grund (etwa Bearbeitung derselben Komponente) in Beziehung setzen. Die Abhängigkeitsanalyse reduziert die abgeleiteten Beziehungen INF nun auf lediglich direkte Abhängigkeiten DID.

Hieran schließt sich im Rahmen der Datenanalyse ANA eine kontextsensitive Analyse CAA an, in welcher die Vorhersage von Tür-Qualitäts-Ereignissen durch eine Nächst-Nachbar-Einstufung derjenigen Variablen erfolgt, welche die Tür-Qualität direkt beinflussen, d.h. die Tür-Qualitäts-Ereignisse hängen direkt von diesen Variablen ab. Eine Nächst-Nachbar-Einstufung kann mit an sich bekannten Algorithmen durchgeführt werden. Es resultiert ein deutlich reduziertes Modell von direkten Abhängigkeiten: So wird etwa die Montage der inneren Türverkleidung für das Problem der Tür-Montage-Qualität nicht mehr in Betracht gezogen. Entsprechend resultiert ein deutlich reduzierter Problemraum, in welchem weitere Klassifizierungen, Zusammenfassungen oder Vorhersagen vorgenommen werden können.

Für den Fall hingegen, dass mittels der vorhergehenden Schritte keine hinreichende Abhängigkeitsanalyse erfolgen kann, wird ein einfacher Abhängigkeitsgraph von dem semantischen Modell abgeleitet, in welchem lediglich "hängt-ab-von"-Beziehungen enthalten sind. Mittels eines Lernalgorithmus wird ein solches lineares Abhängigkeitsmodell an die Gegebenheiten des semantischen Modells angepasst.

Grundsätzlich kann in weiteren Ausführungsbeispielen im Rahmen der kontextsensitiven Analyse auch eine Ursachenaufklärung ROC erfolgen oder auch eine sonstige Extraktion von wesentlich erscheinenden Eigenschaften FES.

Ein zweites, nicht eigens dargestelltes Ausführungsbeispiel betrifft die Ursachenaufklärung einer anomalen Brennstofftemperatur in einer Gasturbine. Dazu wird zunächst anhand eines Kraftwerk-Kennzeichensystems (KKS) ein semantisches Modell des Sensorsystems gebildet. Die Struktur des Systems legt dem System eine Reihe von abhängigkeitsrelevanten Beziehungen auf: So ist die Richtung des Massenflusses durch das System eindeutig und vorab festgelegt. Der Massenfluss durch das System führt zu einer Reihe von zeitlichen "nachher"-Beziehungen der einzelnen Instanzen. Beispielsweise wird die Temperatur und die Zusammensetzung einer Brennstoffeinheit vor dessen Zündung gemessen. Weiterhin wird die Abgastemperatur demgegenüber später gemessen. Zudem umfasst die Struktur des Systems zahlreiche "ist-Bestandteil-von"-Beziehungen.

Die Abhängigkeitsanalyse erfolgt analog zum vorangegangenen Ausführungsbeispiel. Aufgrund der zeitlichen "nachher"-Beziehungen folgt etwa, dass die Brennstofftemperatur unabhängig von der Abgastemperatur ist, während der Umkehrschluss nicht notwendig zutrifft. Aufgrund dieser Abhängigkeitsanalyse wird eine Ursachenaufklärung durchgeführt. Aufgrund der Ursachenaufklärung wird die letztliche Ursache für eine anomale Brennstofftemperatur ermittelt. Abhängig von der Abhängigkeitsanalyse wird die Abgastemperatur automatisch aus der Menge möglicher Ursachen ausgeschlossen.

## Patentansprüche

1. Verfahren zur Modellierung eines technischen Systems (TES), bei welchem zunächst ein semantisches Systemmodell (SSM) des technischen Systems (TES) generiert wird und nachfolgend die Abhängigkeiten innerhalb des Systemmodells mittels einer Abhängigkeitsanalyse (DEA) analysiert werden, welche auf Eigenschaften des semantischen Systemmodells (SSM) beruht.

2. Verfahren nach Anspruch 1, bei welchem das semantische Systemmodell (SSM) mittels Steuerungs- und/oder Prozess- und/oder Zusammensetzungsinformationen generiert wird.

3. Verfahren nach einem der vorhergehenden Ansprüche, bei welchem im Systemmodell (SSM) die Abhängigkeiten abhängig von der Abhängigkeitsanalyse (DEA) gewichtet werden.

4. Verfahren nach einem der vorhergehenden Ansprüche, bei welchem im Systemmodell (SSM) die Abhängigkeiten gewichtet werden, indem die Abhängigkeiten abhängig von der Abhängigkeitsanalyse (DEA) in ihrer Zahl reduziert werden.

5. Verfahren nach einem der vorhergehenden Ansprüche, bei welchem die Abhängigkeitsanalyse (DEA) prüft, ob eine jeweilige Abhängigkeit eine gerichtete Abhängigkeit ist.

6. Verfahren nach einem der vorhergehenden Ansprüche, bei welchem Ergebnisse der Abhängigkeitsanalyse (DEA) herangezogen werden und hierauf basierend eine Überwachung des technischen Systems (TES) und/oder eine Steuerung des Systems und/oder die Verbesserung einer solchen Steuerung durchgeführt wird/werden.

7. Verfahren nach einem der vorhergehenden Ansprüche, bei welchem Ergebnisse der Abhängigkeitsanalyse (DEA) herangezogen werden und hierauf basierend eine Analyse von Daten des technischen Systems (TES) durchgeführt wird.

8. Verfahren nach einem der vorhergehenden Ansprüche, bei welchem Ergebnisse der Abhängigkeitsanalyse (DEA) herangezogen werden und hierauf basierend eine Ursachenanalyse (ROC) für Vorgänge des technischen Systems (TES) durchgeführt wird.

9. Verfahren nach einem der vorhergehenden Ansprüche, welches selbstlernend ausgebildet ist.

10. Computerprogrammprodukt, welches zur Durchführung eines der vorhergehenden Verfahren ausgebildet ist.
